# EUROPEAN PATENT SPECIFICATION

(11) **EP 0 498 628 B1**
(45) Date of publication and mention of the grant of the patent: **24.07.1996**
(21) Application number: 92300954.2
(22) Date of filing: 04.02.1992
(51) Int. Cl.: C08G 18/10, C08J 9/00, C08L 75/04

(54) **Method for preparing polymeric foams and chemical compositions used therefor**
Verfahren zur Herstellung von polymerischen Schäumen und chemische Zusammensetzung zu dessen Herstellung
Procédé de préparation de mousses polymériques et compositions chimiques utilisées

(30) Priority: 04.02.1991 GB 9102362
(43) Date of publication of application: 12.08.1992
(73) Proprietor: IMPERIAL CHEMICAL INDUSTRIES PLC, London SW1P 3JF (GB)
(72) Inventor: Gillis, Herbert Russell, Sterling Heights, Michigan 48077 (US); Postema, Aaldrik Roelf, NL-1852 VG Heiloo (NL); Stanssens, Drik, B-3620 Lanaken (BE); Randall, David, B-3078 Everberg (BE); De Vos, Rik, B-3110 Rotselaar (BE)
(74) Representative: Swinnen, Anne-Marie

(56) References cited:
- EP-A- 419 114
- DE-A- 2 415 150
- FR-A- 1 447 850

## Description

This invention relates to polymeric foams and more especially to rigid polyurethane foams derived from organic polyisocyanates and to methods for their preparation.

The production of foamed materials based on polyurethane and other polymer systems derived from organic polyisocyanate is well established. Depending upon the formulations used in their manufacture, the products can vary in texture from the soft flexible foams used as cushioning materials to the rigid foams used as insulating or structural materials. Similarly, depending upon the amount of blowing agent used, products having densities varying between about 10 and about 1100 kg/m³ can be made.

For more than thirty years, the principal blowing agents used in the production of these foams have comprised water, which reacts with the polyisocyanate to form carbon dioxide, and fully halogenated chlorofluorocarbons, especially trichlorofluoromethane, which vaporise and expand under the influence of the exothermic polymer-forming reaction.

In recent years, however, there has been increasing international concern that chlorofluorocarbons may be destroying the earth's protective ozone layer and there is general agreement that their manufacture and use should be severely restricted. Accordingly, it will be necessary in many foam formulations to replace trichlorofluoromethane, at least in part, by other blowing agents. It is not always feasible to use water as a replacement for chlorofluorocarbons because the urea residues formed by reaction between the polyisocyanate and water can lead to undesirable level of surface friability in the foams.

It is known (Tsuzuki et al, J. Org, Chem., 25, 1009, 1960) that phenyl isocyanate reacts with ethylene carbonate with evolution of carbon dioxide to form an oxazolidone but, hitherto, this reaction has not been utilised in the production of polymeric foams.

It has now been found that the use of certain cyclic carbonates or cyclic ureas as blowing promoter in conjunction with specific catalysts and in the presence of an inert insoluble organic liquid, in isocyanate-based foam formulations provides fine celled rigid polymeric products having improved physical properties.

EP 0419114, falling within the terms of Article 54, paragraph 3, describes the use of such cyclic carbonates in conjunction with such catalysts and in the presence of trichlorofluoromethane, which is generally soluble in isocyanate-reactive materials and thus does not fall within the definition of inert insoluble organic liquid.

More particularly, fine celled, open celled rigid foams may be produced, which are of particular interest for vacuum panel applications.

Accordingly, the present invention provides a method for the preparation of rigid foams by reacting an organic polyisocyanate with an isocyanate-reactive material characterised in that the isocyanate-reactive material comprises at least one isocyanate-reactive cyclic compound of formula : 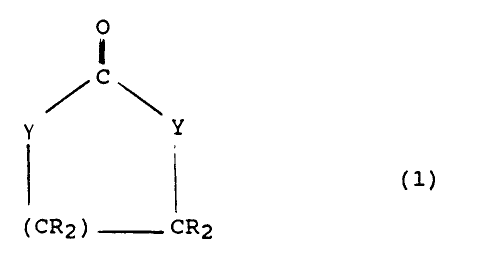
wherein Y is -0- or -NR¹-
wherein each R¹, independently is a lower alkyl radical of C₁-C₆, or a lower alkyl radical substituted with an isocyanate-reactive group,
wherein each R, independently is H, a lower alkyl radical of C₁-C₆, or - (CH₂)ₘ - X wherein X is an isocyanate-reactive group which is OH or NH ₂, and m is 0, 1 or 2; and wherein n is 1 or 2 with the proviso that at least one of R¹ or R is or comprises an isocyanate-reactive group, the reaction being performed in the presence of an inert insoluble organic liquid which is present as the disperse phase of an emulsion or a microemulsion, and in the presence of a metal salt catalyst.

A preferred compound of formula (1) wherein Y is -0- is an isocyanate-reactive cyclic carbonate which is glycerol carbonate.

Preferred compounds of formula (1) wherein Y is -NR¹- are isocyanate-reactive cyclic ureas of formula : 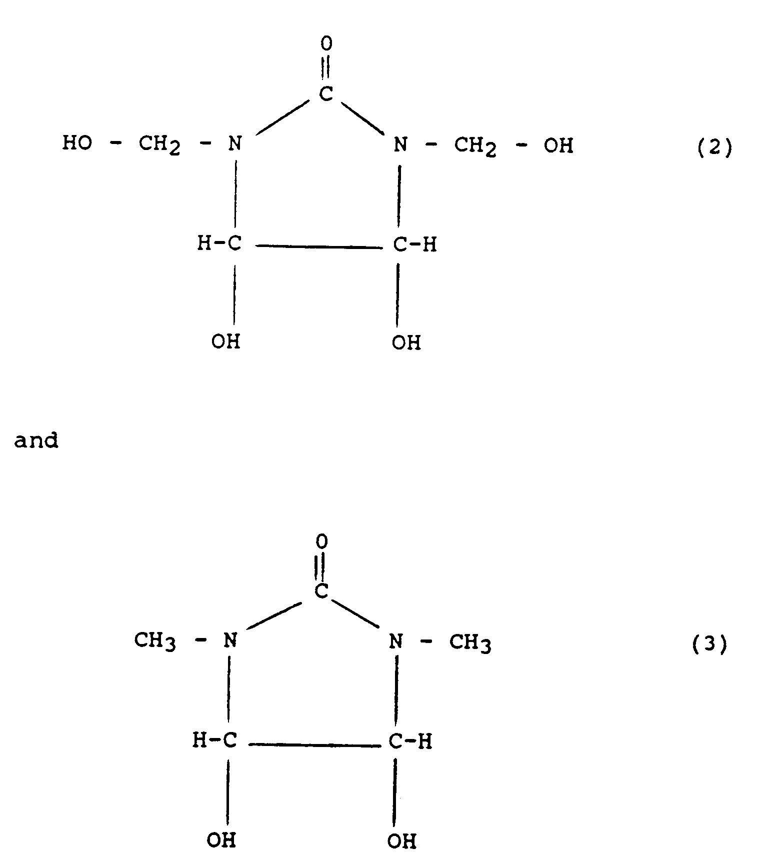
The insolubility of the inert organic liquid in the reaction mixture usually arises from the fact that it is insoluble in one or more of the major ingredients of the foam formulation, especially the isocyanate-reactive material and/or the polyisocyanate.

Solubility in these materials can be determined by conventional techniques.

The expression "inert" is to be understood as meaning that the organic liquid is chemically inert to the other ingredients of the foam formulation.

Examples of insoluble inert organic liquids include fluorinated compounds, aliphatic, cycloaliphatic or aromatic hydrocarbons having at least 7 C atoms.

It is preferred, however, to use as insoluble inert organic liquid a highly fluorinated or perfluorinated compound having a boiling point of at least 40°C under normal conditions, preferably at least 60°C, more preferably about 80°C or even above the maximum exotherm temperature of the foaming reaction.

Suitable highly fluorinated or perfluorinated compounds which may be used in the present invention include aliphatic or cycloaliphatic compounds such as alkanes or cycloalkanes which may be substituted or non substituted, cyclic or non cyclic compounds containing at least one 0 atom, which may be substituted or non substituted - such as fluorinated ehters -, cyclic or non cyclic compounds containing at least one N atom, which may be substituted or non substituted - such as fluorinated amines -, cyclic or non cyclic compounds, containing 0 and N atoms, which may be substituted or non substituted, such as fluorinated hydroxyl amines, or fluorinated amino-ethers, cyclic or non cyclic compounds containing at least one S atom, which may be substituted or non substituted, such as fluorinated sulfones, for example CF₃SO₂CF₃ and CF₃SO₂CF₂CF₃.
Particular examples of highly fluorinated or perfluorinated hydrocarbons include :
perfluoronorbornadiene, perfluorodecaline, perfluorodimethylcyclohexane, perfluoromethylcyclohexane, perfluoro-1-methyl-decaline, perfluorophenantrene, perfluorodimethylcyclobutane, C₉F₁₉CHF₂, C₈F₁₈, C₇F₁₆ and their cyclic derivatives.

Particular examples of highly fluorinated or perfluorinated oxygen containing compounds include : perfluorobutyltetrahydrofuran, perfluoropropyltetrahydrofuran.

Particular examples of highly fluorinated or perfluorinated compounds containing N atoms or N atoms and O atoms include fluorine-containing tertiary amines, for example (CHF₂)₃N, CF₃N(CHF₂)₂, (CF₃)₂NC₂F₅, CF₃N(C₂F₅)₂, (C₂F₅)₃N, (CF₃)₂NCF₂CF₂H, CF₃CH₂N(CH₃)₂ and N-methyloctafluoropyrrolidine, fluorine-containing hydrazines, for example (CF₃)₂NN(CF₃)₂ or (CF₃)₂NOCH₃, (CF₃)₂NOC₂F₅, 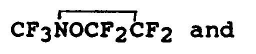
and 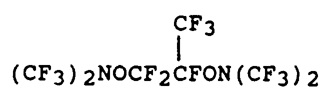
and fluorine-containing amino-ethers, for examples (CF₃)₂NCF₂CF₂OCF₃ and most preferably : perfluoro-N-methylmorpholine, perfluorotripentylamine, perfluorotributylamine, perfluorotripropylamine, perfluoro-N-methylpiperidine.

Other suitable fluorinated compounds include the perfluorinated ethers commercialised by Montefluos S.p.A. as Galden® HT200 or Galden® HT 230, Galden® HT 250, Galden® HT 270.

To ensure zero ozone depletion potential, it is preferred to use fluorinated compounds containing no other halogen atoms.

Preferred metal salts catalysts for use in the present invention should be selected among group Ia and group IIa metal salts, more preferably among group Ia and group IIa metal carboxylates.

Particularly suitable catalysts for use in the present invention should be selected among : potassium acetate and potassium ethyl-hexoate.

Organic polyisocyanates which may be used in the method of the invention include aliphatic, cycloaliphatic, araliphatic and aromatic polyisocyanates but especially the polyisocyanates proposed in literature for use in the production of foams. Of particular importance are aromatic diisocyanates such as tolylene and diphenylmethane diisocyanate in the well known pure modified or crude forms. Special mention may be made of the so-called MDI variants (diphenylmethane diisocyanate modified by the introduction of urethane, allophanate, urea, biuret, carbodiimide, uetonimine or isocyanurate residues) and the mixtures of diphenylmethane di isocyanate(s) and oligomers thereof known in the art as "crude" or "polymeric" MDI (polymethylene polyphenylene polyisocyanates).

In performing the method of the invention the polyisocyanate may be reacted with the isocyanate-reactive cyclic carbonate or isocyanate-reactive cyclic urea in the absence or presence of other isocyanate-reactive materials. It is preferred, however, to perform the method of the invention in the presence of other isocyanate-reactive materials.

The nature of the isocyanate-reactive component which may be used in the present invention depends on the type of polymeric product obtained.

Suitable isocyanate-reactive compounds generally include polyols, amines, imines and enamines and mixtures thereof.

For the preparation of rigid foams, suitable isocyanate-reactive compounds, especially polyols, in general have a molecular weight of 62 to 1500 and a functionality of 2-8, especially 3-8.

Polymeric polyols have been fully described in the prior art and include reaction products of alkylene oxides, for example ethylene oxide and/or propylene oxide, with initiators containing from 3 to 8 active hydrogen atoms per molecule. Suitable initiators include polyols, for example glycerol, trimethylopropane, triethanolamine, pentaerythritol, sorbitol and sucrose, and polyamines, for example diamine, tolylene diamine, diaminodiphenylmethane and polymethylene polyphenylene polyamines, and aminoalcohols, for example ethanolamine and diethanolamine, and mixtures of such initiators. Other suitable polymeric polyols include polyesters obtained by the condensation of appropriate proportions of glycols and higher functionality polyols with dicarboxylic acids. Still further suitable polymeric polyols include hydroxyl terminated polythioethers, polyamides, polyesteramides, polycarbonates, polyacetals, polyolefins and polysiloxanes.

Polyamines having a molecular weight below 1000 include aliphatic, cycloaliphatic or araliphatic polyamines containing two or more primary and/or secondary amino groups, - such as the low MW amino-ended polyethers -, and aromatic polyamines such as DETDA.

The substantially insoluble inert organic liquid will usually be incorporated in the foam-forming reaction mixture in the form of an emulsion or preferably a microemulsion in one of the major components, that is to say in the isocyanate-reactive component or the polyisocyanate. Such emulsions or microemulsions may be prepared using conventional techniques and suitable emulsifying agents.

Emulsifying agents suitable for preparing stable emulsions or microemulsions of fluorinated liquid compounds in organic polyisocyanates and/or isocyanate-reactive compounds include surfactants chosen from the group of nonionic, ionic i.e. anionic or cationic, and amphoteric surfactants. Preferred surfactants are fluoro surfactants and/or alkoxylated alkanes. Particular examples of fluoro surfactants include :
fluorinated alkyl polyoxyethylene ethanols, fluorinated alkyl alkoxylate, fluorinated alkyl esters.

Suitable further blowing agents may be used in the method of the present invention such as H₂O or inert low boiling compounds having a boiling point of above -50°C at 1 bar.

The amount of water used as blowing agents may be selected in known manner to provide foams of the desired density, typical amounts being in the range from 0.05 to 5 parts by weight per 100 parts by weight of reactive ingredients, although it may be a particular embodiment of the present invention to incorporate up to 10 % by wt or even up to 20 % by wt of H₂O.

Suitable inert blowing agents, include for example hydrocarbons, dialkyl ethers, alkyl alkanoates, aliphatic and cycloaliphatic hydrofluorocarbons, hydrochlorofluorocarbons, chlorofluorocarbons, and fluorine-containing ethers. Suitable hydrocarbon blowing agents include lower aliphatic or cyclic hydrocarbons of such as pentane, iso-pentane, cyclopentane or neopentane, hexane, cyclohexane.

To reduce the number of component streams delivered to the final mixing apparatus, the cyclic carbonate, the catalyst, the inert insoluble organic liquid and optionally the inert volatile blowing agents and other additives, may be pre-mixed with one of the major components of the foam formulation.
In particular, when the foam formulation contains a rigid foam polyol, the isocyanate-reactive cyclic compound, for example glycerol carbonate, may be mixed with the polyol to form a useful polyol composition.

Suitable polyol compositions contain from 1 to 99 %, preferably from 1 to 60 %, of the cyclic isocyanate-reactive compound on a weight basis.
In addition to the ingredients already mentioned, the foam-forming mixture may contain one or more other auxiliaries or additives conventional to isocyanate-based foam formulations. Such optional additives include, further conventional catalysts, fire retardants, smoke suppressants, organic or inorganic fillers, thixotropic agents, dyes, pigments, mould release agents, surfactants, foam stabilisers and the like.

Isocyanate indices of from 70 to 140 will typically be used in operating the method of the invention but lower indices may be used if desired. Higher indices, for example 150 to 500 or even up to 3000, may be used in conjunction with trimerisation catalysts to make foams containing isocyanurate linkages.

The method of the invention may be put into practice making use of conventional techniques. Thus known mixing methods may be used and the foams may be produced in the form of slabstock, mouldings, cavity fillings, sprayed foam, frothed foam or laminates with other materials such as hardboard, plasterboard, paper, plastics or metals. Rigid foams prepared in accordance with the method of the invention are characterised by having open cells and a very fine cell structure. They are of particular use for vacuum panels applications where they show superior thermal insulation properties.

The invention is illustrated but not limited by the following Examples, in which all parts and percentages are by weight.

### Example 1

A rigid foam of fine cell structure and good insulation property was prepared by using the following formulation :

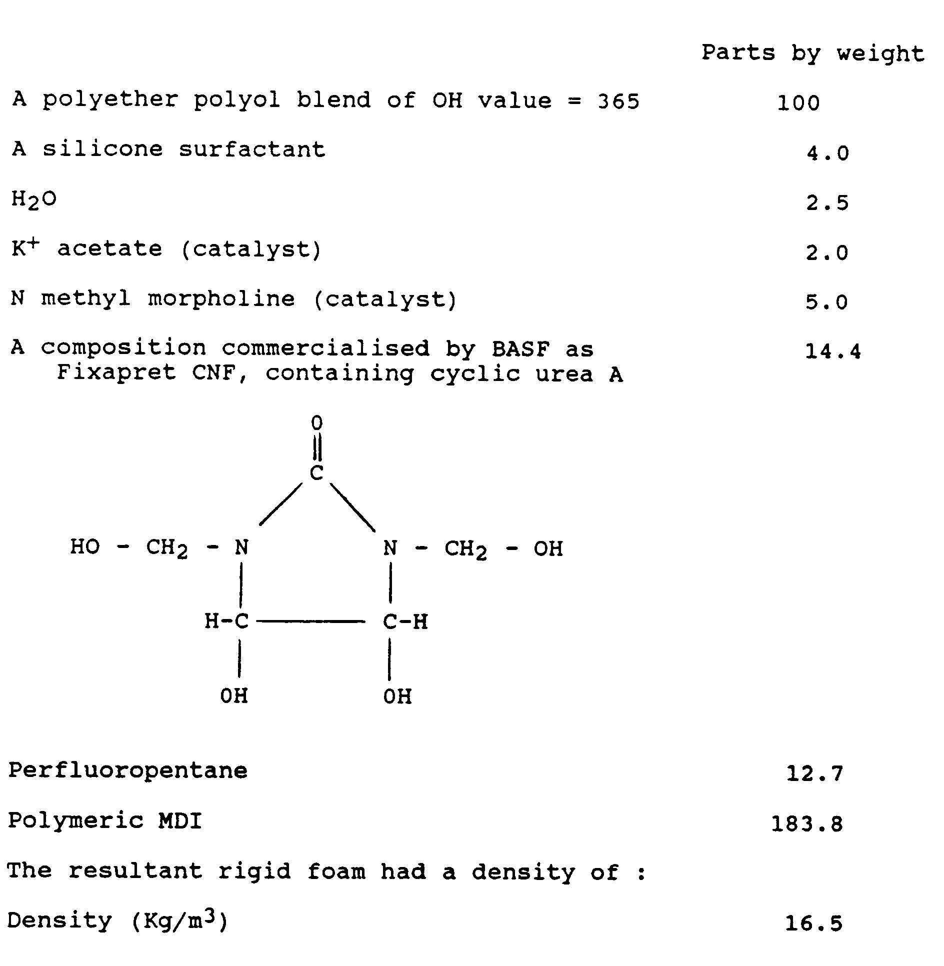

### Example 2

A rigid foam of fine cell - open cell structure was prepared by using the following formulation :

| | |
|---|---|
| A polyether polyol blend of OH value = 365 | 100 |
| A silicone surfactant | 4.0 |
| H₂O | 3.2 |
| K⁺ acetate | 1.8 |
| Glycerol carbonate | 5.25 |
| Perfluoropentane | 16.3 |
| Polymeric MDI | 171 |
| Density (kg/m³) | 26.5 |

### Example 3

A rigid foam of open cell - fine cell structure and good insulation property was prepared by using the following formulation :

| | |
|---|---|
| A polyether polyol blend of OH value = 365 | 100 |
| A silicone surfactant | 4.0 |
| H₂O | 2.5 |
| K⁺ acetate | 1.8 |
| Glycerol carbonate | 5.25 |
| Perfluoro-2-butyl-tetrahydrofurane | 2.00 |
| Polymeric MDI | 156 |
| Closed cell content | 3 % |
| Density (kg/m³) | 37.2 |

### Example 4

A rigid foam of open cell - fine cell structure and good insulation property was prepared by using the following formulation :

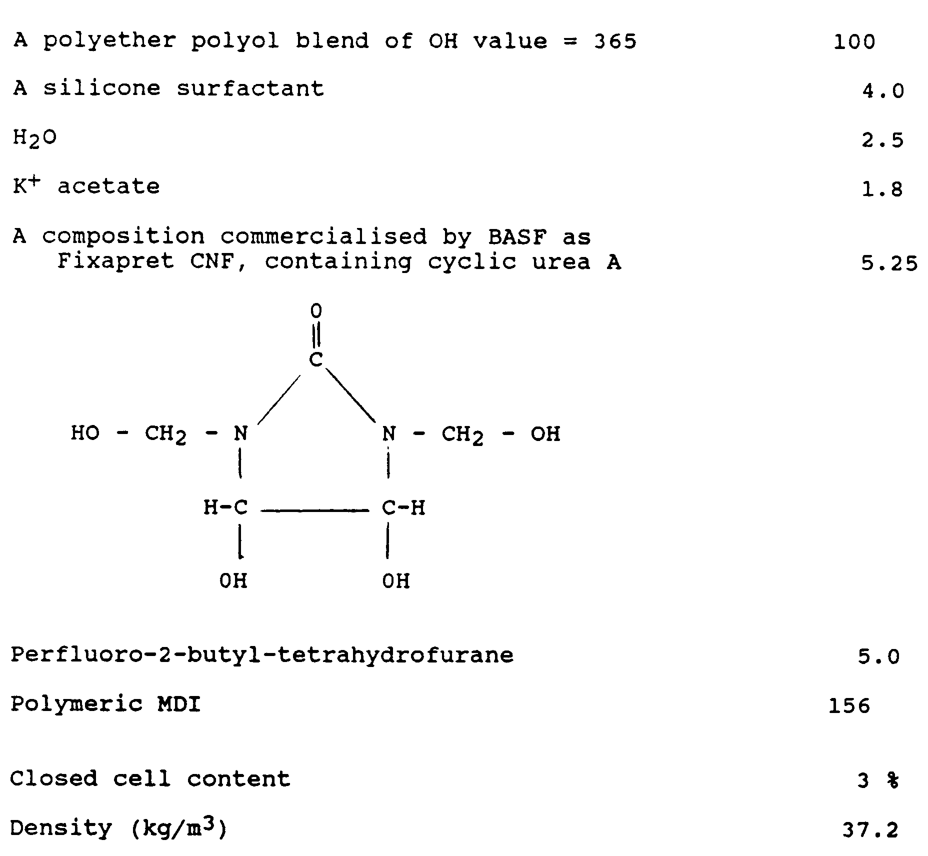

## Claims

1. A method for the preparation of rigid foams by reacting an organic polyisocyanate with an isocyanate-reactive material characterised in that the isocyanate-reactive material comprises at least one isocyanate-reactive cyclic compound of the formula : 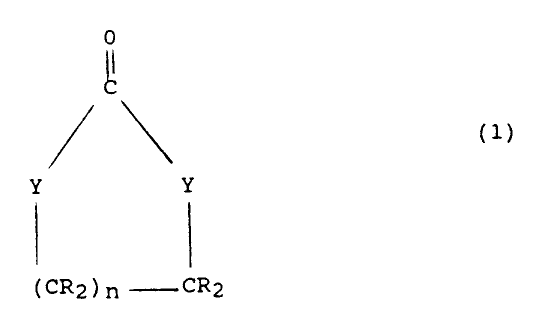 wherein Y is -0- or -NR¹-
wherein each R¹, independently is a lower alkyl radical of C₁-C₆, or a lower alkyl radical substituted with an isocyanate-reactive group,
wherein each R, independently is H, a lower alkyl radical of C₁-C₆, or - (CH₂)ₘ - X wherein X is an isocyanate-reactive group which is OH or NH₂, and m is 0, 1 or 2; and wherein n is 1 or 2 with the proviso that at least one of R¹ or R is or comprises an isocyanate-reactive group, the reaction being performed in the presence of an inert insoluble organic liquid which is present as the disperse phase of an emulsion or a microemulsion, and in the presence of a metal salt catalyst.

2. A method according to claim 1, wherein the metal salt is selected among group Ia and group IIa metal salts.

3. A method according to claim 1, wherein the metal salt is a metal carboxylate.

4. A method according to claim 1 wherein the metal salt is potassium acetate or potassium -2-ethyl-hexoate.

5. A method according to claim 1 wherein the isocyanate-reactive cyclic compound is glycerol carbonate.

6. A method according to claim 1 wherein the isocyanate-reactive cyclic compound is a cyclic urea of formula :

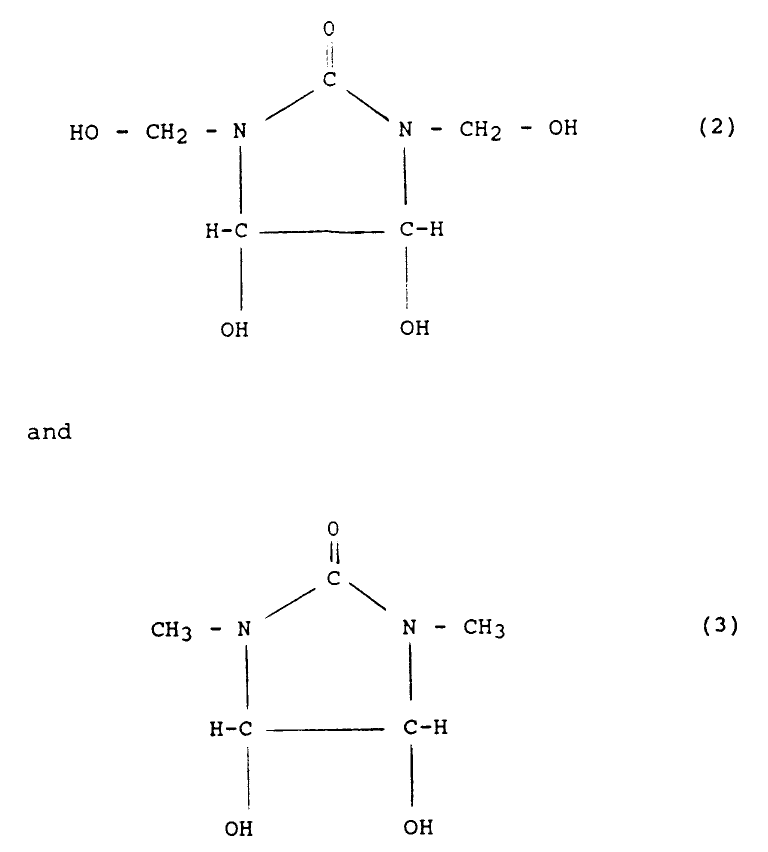

7. A method according to claim 1 wherein the substantially insoluble inert organic liquid is a highly fluorinated or perfluorinated compound having a boiling point of at least 40°C.

8. A method according to claim 1 wherein the isocyanate-reactive material further comprises a polyol having a MW from 62 to 1500 and a functionality of 2 to 8.

9. An isocyanate-reactive composition comprising :
a) at least one isocyanate-reactive compound selected from polyols, polyamines, imino- or enamino compounds,
b) an isocyanate-reactive cyclic carbonate or an isocyanate-reactive cyclic urea,
c) a liquid fluorinated compound having a boiling point of at least 40°C which is substantially insoluble in the said composition and is present as the disperse phase of an emulsion or a microemulsion,
and
d) a catalytically effective amount of a catalyst selected among group Ia- and group IIa-metal carboxylates.

10. An isocyanate-reactive composition according to claim 10 containing from 1 to 60 % of isocyanate-reactive cyclic carbonate or cyclic urea on a weight basis.

## Patentansprüche

1. Verfahren zur Herstellung von Hartschaumstoffen mittels der Umsetzung eines organischen Polyisocyanats mit einem isocyanat-reaktiven Material,
**dadurch gekennzeichnet, daß**
das isocyanat-reaktive Material mindestens eine isocyanat-reaktive cyclische Verbindung mit der nachstehenden Formel umfaßt: 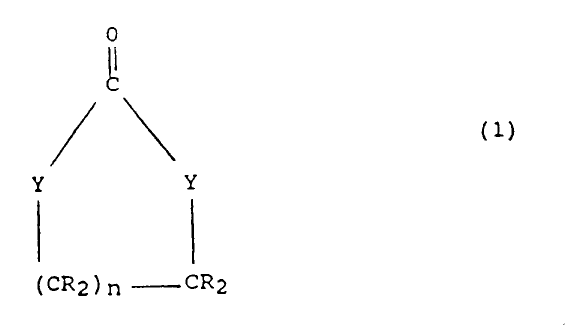 wobei Y -O- oder -NR¹- ist,
wobei jedes R¹ unabhängig einen Niedrigalkylrest aus C₁-C₆ oder einen Niedrigalkylrest, der mit einer isocyanat-reaktiven Gruppe substituiert ist, darstellt,
wobei jedes R unabhängig H, einen Niedrigalkylrest aus C₁-C₆ oder -(CH₂)ₘ-X darstellt, wobei X eine isocyanat-reaktive Gruppe ist, die aus OH oder NH₂ besteht, und m 0, 1 oder 2 ist, und wobei n 1 oder 2 ist, unter der Voraussetzung, daß mindestens eine der beiden Gruppen, R¹ oder R, eine isocyanat-reaktive Gruppe ist oder umfaßt, wobei die Umsetzung in Gegenwart einer inerten, unlöslichen organischen Flüssigkeit, die als die disperse Phase einer Emulsion oder einer Mikroemulsion vorhanden ist, und in Gegenwart eines Metallsalzkatalysators durchgeführt wird.

2. Verfahren nach Anspruch 1,
**dadurch gekennzeichnet, daß**
das Metallsalz aus Metallsalzen der Gruppe Ia und der Gruppe IIa ausgewählt ist.

3. Verfahren nach Anspruch 1,
**dadurch gekennzeichnet, daß**
das Metallsalz ein Metallcarboxylat ist.

4. Verfahren nach Anspruch 1,
**dadurch gekennzeichnet, daß**
das Metallsalz Kaliumacetat oder Kalium-2-ethylhexoat ist.

5. Verfahren nach Anspruch 1,
**dadurch gekennzeichnet, daß**
die isocyanat-reaktive cyclische Verbindung Glycerolcarbonat ist.

6. Verfahren nach Anspruch 1,
**dadurch gekennzeichnet, daß**
die isocyanat-reaktive cyclische Verbindung ein cyclischer Harnstoff mit der nachstehenden Formel ist:

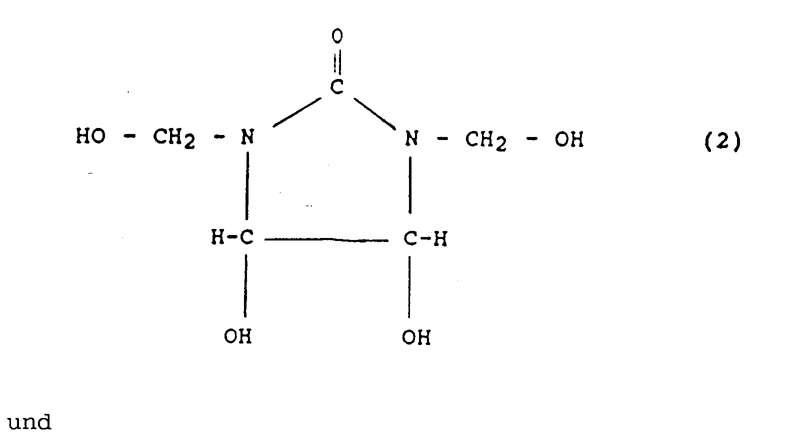

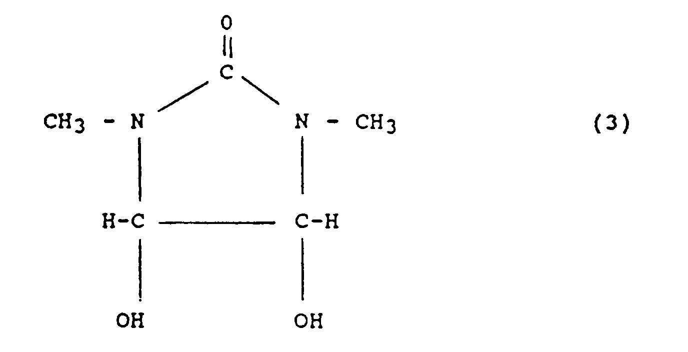

7. Verfahren nach Anspruch 1,
**dadurch gekennzeichnet, daß**
die im wesentlichen unlösliche, inerte organische Flüssigkeit eine hochfluorierte oder perfluorierte Verbindung mit einem Siedepunkt von mindestens 40 °C ist.

8. Verfahren nach Anspruch 1,
**dadurch gekennzeichnet, daß**
das isocyanat-reaktive Material ferner ein Polyol mit einem Molekulargewicht von 62 bis 1500 und einer Funktionalität von 2 bis 8 umfaßt.

9. Isocyanat-reaktive Zusammensetzung, umfassend:
a) mindestens eine isocyanat-reaktive Verbindung, ausgewählt aus Polyolen, Polyaminen, Imino- oder Enaminoverbindungen,
b) ein isocyanat-reaktives cyclisches Carbonat oder einen isocyanat-reaktiven cyclischen Harnstoff
c) eine flüssige, fluorierte Verbindung mit einem Siedepunkt von mindestens 40 °C, die in der Zusammensetzung im wesentlichen unlöslich und als die disperse Phase einer Emulsion oder einer Mikroemulsion vorhanden ist,
und
d) eine katalytisch wirksame Menge eines Katalysators, ausgewählt aus Metallcarboxylaten der Gruppe Ia und der Gruppe IIa.

10. Isocyanat-reaktive Zusammensetzung nach Anspruch 9, die bezogen auf das Gewicht 1 bis 60 % an isocyanat-reaktivem cyclischen Carbonat oder cyclischen Harnstoff enthält.

## Revendications

1. Procédé pour la préparation de mousses rigides, par réaction d'un polyisocyanate organique avec une matière réactive vis-à-vis des isocyanates, caractérisé en ce que la matière réactive vis-à-vis des isocyanates comprend au moins un composé cyclique réactif vis-à-vis des isocyanates, de formule : 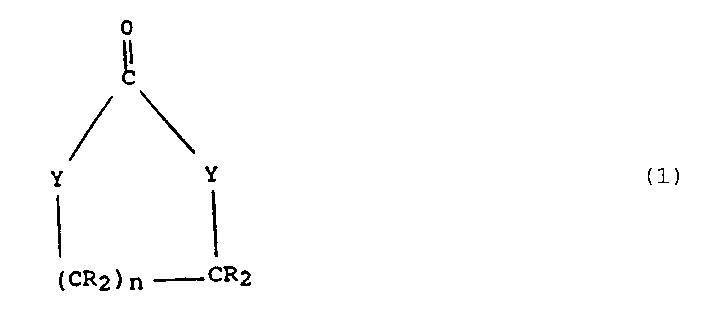 dans laquelle Y est -O- ou -NR¹-, où chaque R¹ est indépendamment un radical alkyle inférieur en C₁-C₆ ou un radical alkyle inférieur substitué par un groupe réactif vis-à-vis des isocyanates,
dans laquelle chaque R est indépendamment H, un radical alkyle inférieur en C₁-C₆ ou -(CH₂)ₘ-X où X est un groupe réactif vis-à-vis des isocyanates qui est OH ou NH₂, et m vaut 0, 1 ou 2 ; et dans laquelle n vaut 1 ou 2, du moment qu'au moins l'un de R¹ et R est ou comprend un groupe réactif vis-à-vis des isocyanates, la réaction étant effectuée en présence d'un liquide organique insoluble inerte qui est présent en tant que phase dispersée d'une émulsion ou d'une microémulsion, et en présence d'un sel métallique catalyseur.

2. Procédé selon la revendication 1, dans lequel le sel métallique est choisi parmi les sels métalliques du groupe Ia et du groupe IIa.

3. Procédé selon la revendication 1, dans lequel le sel métallique est un carboxylate métallique.

4. Procédé selon la revendication 1, dans lequel le sel métallique est l'acétate de potassium ou le 2-éthylhexanoate de potassium.

5. Procédé selon la revendication 1, dans lequel le composé cyclique réactif vis-à-vis des isocyanates est le carbonate de glycérol.

6. Procédé selon la revendication 1, dans lequel le composé cyclique réactif vis-à-vis des isocyanates est une urée cyclique de formule :

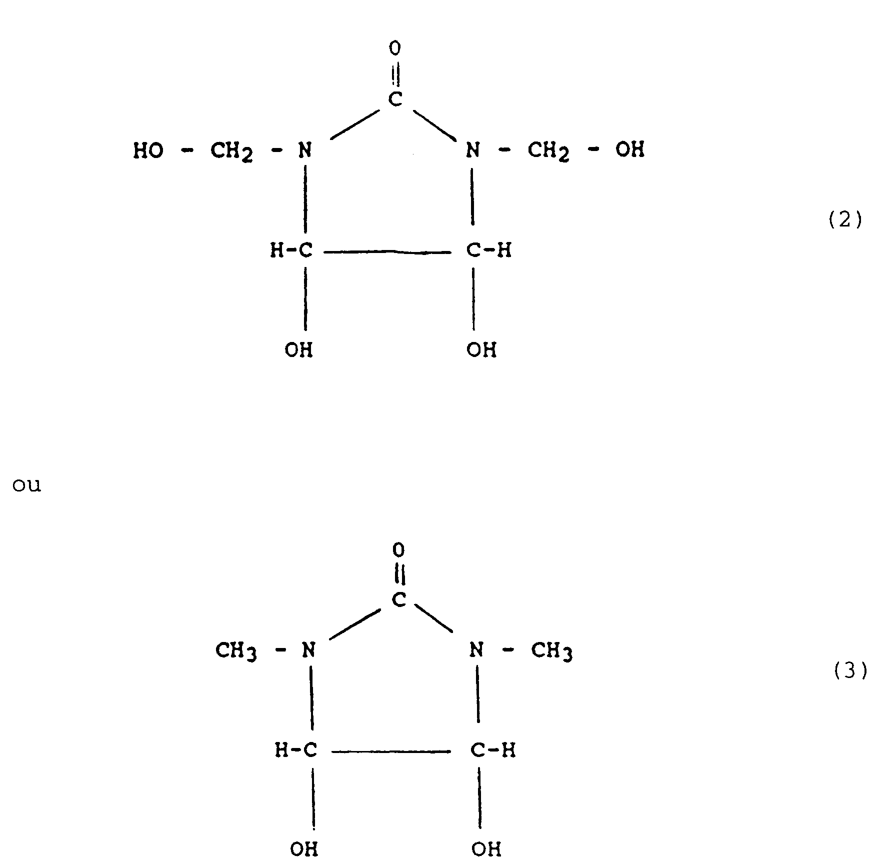

7. Procédé selon la revendication 1, dans lequel le liquide organique inerte sensiblement insoluble est un composé hautement fluoré ou perfluoré ayant un point d'ébullition d'au moins 40°C.

8. Procédé selon la revendication 1, dans lequel la matière réactive vis-à-vis des isocyanates comprend en outre un polyol ayant une masse moléculaire comprise entre 62 et 1500 et une fonctionnalité comprise entre 2 et 8.

9. Composition réactive vis-à-vis des isocyanates, comprenant :
a) au moins un composé réactif vis-à-vis des isocyanates choisi parmi les polyols, les polyamines, les composés imino et les composés énamino,
b) un carbonate cyclique réactif vis-à-vis des isocyanates ou une urée cyclique réactive vis-à-vis des isocyanates,
c) un composé fluoré liquide ayant un point d'ébullition d'au moins 40°C, qui est sensiblement insoluble dans ladite composition et est présent sous forme de phase dispersée d'une émulsion ou d'une microémulsion, et
d) une quantité catalytiquement efficace d'un catalyseur choisi parmi les carboxylates métalliques du groupe Ia et du groupe IIa.

10. Composition réactive vis-à-vis des isocyanates selon la revendication 10, contenant de 1 à 60 % en poids d'une urée cyclique ou d'un carbonate cyclique réactif vis-à-vis des isocyanates.
